# EUROPÄISCHE PATENTSCHRIFT

(11) **EP 0 756 572 B1**
(45) Veröffentlichungstag und Bekanntmachung des Hinweises auf die Patenterteilung: **22.04.1998**
(21) Anmeldenummer: 95915876.7
(22) Anmeldetag: 13.04.1995
(51) Int. Cl.: B65G 65/48, B01J 8/00

(54) **VORRICHTUNG ZUM DOSIERTEN AUSTRAGEN VON SCHÜTTFÄHIGEM FESTSTOFF**
DEVICE FOR METERED EXTRACTION OF BULK SOLIDS
DISPOSITIF DE PRELEVEMENT DOSE DE SOLIDES EN VRAC

(30) Priorität: 21.04.1994 DE 4413864
(43) Veröffentlichungstag der Anmeldung: 05.02.1997
(73) Patentinhaber: STEAG Aktiengesellschaft, 45128 Essen (DE)
(72) Erfinder: BRÜGGENDICK, Hermann, D-46514 Schermbeck (DE); BIALOWONS, Horst, D-61200 Wolferheim (DE)
(86) Internationale Anmeldenummer: EP9501401
(87) Internationale Veröffentlichungsnummer: WO9529114

(56) Entgegenhaltungen:
- EP-A- 0 178 005
- DE-A- 2 421 983
- DE-B- 1 042 471
- FR-A- 1 546 792
- FR-A- 2 225 362

## Beschreibung

Die Erfindung betrifft einen Adsorptionsmittelreaktor mit einer Mehrzahl von Abzugstrichtern zum Austragen von schüttfähigem Adsorptionsmittel (Schüttgut) aus dem Reaktor, wobei jeder Abzugstrichter wenigstens eine Abgabeöffnung aufweist und wobei unter den Abgabeöffnungen einer Mehrzahl von Abzugstrichtern ein gemeinsamer Sammeltrichter angeordnet ist, der zu seiner Entleerung eine eigene Abzugsvorrichtung aufweist.

Bei einer aus der DE-PS 40 00 204 bekannten Vorrichtung dieser Art wird das Schüttgut auf einen horizontalen Zwischenspeicherboden unter mehreren Abgabeöffnungen geschüttet. Ein an einem Schwingenparallelogramm über dem horizontalen Zwischenspeicherboden schwingend aufgehängter Austragsrechen greift in den Raum unterhalb der Abgabeöffnungen ein und verschiebt das unter den Abgabeöffnungen aufgeböschte Schüttgut in eine seitliche Austragsöffnung. Dabei werden relativ große Mengen an beladenen Adsorptionsmittelteilchen über lange Betriebszeiten hinweg wartungsfrei abgeführt. Bei geringeren Austragsmengen, begrenzten Betriebszeiten und weniger aggressivem Schüttgut bleiben die erheblichen Vorteile des pendelnd aufgehängten Austragsrechens teilweise ungenutzt, so daß der Investitionsaufwand zu hoch werden kann. Dies gilt beispielsweise für die Adsorptionsmittelreaktoren kleinerer Krematorienanlagen, die in der Praxis nur in Einschicht-Betrieb genutzt werden und einen vergleichsweise geringen Adsorptionsmittelaustrag haben.

Der Erfindung liegt daher die Aufgabe zugrunde, eine besonders einfache und kostengünstig aufgebaute Austragsvorrichtung zur Verfügung zu stellen, die zumindest bei weniger aggressivem Schüttgut mit hoher Zuverlässigkeit arbeitet.

Gelöst wird diese Aufgabe bei einer Vorrichtung der eingangs genannten Art erfindungsgemäß dadurch,
daß die Abgabeöffnungen der Abzugstrichter schlitzförmig ausgebildet sind und jeweils zwei parallele Begrenzungskanten aufweisen;
unter oder in den Abgabeöffnungen jeweils eine Drehschleuse mit wenigstens einer Schleusenkammer angeordnet ist, die von einer im wesentlichen zylindrischen Umfangswand begrenzt ist;
die zylindrische Umfangswand mehrere dem Querschnitt der Abgabeöffnung angepaßte Einlaß/Auslaßöffnungen hat, die in einer Reihe axial hintereinander parallel zur Drehachse der Drehschleuse ausgebildet sind; und
die Anordnung der Drehschleuse und die Abmessung ihrer zylindrischen Umfangswand so gewählt sind, daß alle in einer Reihe angeordneten Einlaß/Auslaßöffnung in einer Drehstellung mit der zugehörigen Abgabeöffnung kommunizieren und in wenigstens einer anderen Drehstellung eine Entleerung der Schleusenkammer unter Schwerkraft des Schüttguts ermöglichen, wobei in der zuletzt genannten Stellung die Trichter-Abgabeöffnung durch die als Verschlußkörper wirkende Umfangswand der Drehschleuse verschlossen ist.

Wenn die Schleusenkammer mit der Abgabeöffnung kommuniziert, wird eine bestimmte, durch den Umfang der Drehschleuse vorgegebene Schüttgutmenge durch die Abgabeöffnung in die Schleusenkammer abgeführt. Diese Schüttgutmenge entspricht bis auf kleine Leerräume oberhalb der Böschungswinkel dem Aufnahmevolumen der Schleusenkammer. Das Füllen der Schleusenkammer ist praktisch zeitunabhängig; denn die bis zum vollständigen Füllen der Schleusenkammer benötigte Zeit ist sehr kurz, und danach ändert sich das Füllvolumen nicht mehr. Sobald die Schleusenkammer in Entleerungsstellung gedreht wird, wird die Trichter-Abgabeöffnung zuverlässig verschlossen. Für den Drehantrieb und dessen Steuerung können einfache und kostengünstige Komponenten verwendet werden. Für viele Anwendungszwecke beim Betrieb des Adsorptionsmittelreaktors ist es zweckmäßig, die Schüttgutabgabe auf mehrere Abgabeöffnungen zu verteilen.

Zu berücksichtigen ist, daß Drehschleusen für Dosiervorrichtungen an sich bekannt sind (DE-OS 2 421 983). Dabei weist jedoch die zylindrische Umfangswand eine durchgehend schlitzförmige Einlaß/Auslaßöffnung auf, was für viele Anwendungszwecke unzweckmäßig ist.

In Weiterbildung der Erfindung ist vorgesehen, daß die Schleusenkammer durch mindestens eine radial verlaufende Scheibe in mehrere axial hintereinander angeordnete Zellen unterteilt ist. Die radialen Scheiben erfüllen zusätzlich zu ihren Trennfunktionen auch Stütz- und Stabilisierungsfunktionen und gewährleisten dadurch eine Aufrechterhaltung der zylindrischen Form der Umfangswand.

Dabei ist vorzugsweise jede der in einer Reihe ausgerichteten Einlaß/Auslaßöffnungen einer Zelle der Schleusenkammer zugeordnet.

Vorzugsweise sind innen auf der zylindrischen Umfangswand der Schleusenkammer in regelmäßigen Abständen umlaufende Stabilisierungsringe angeordnet.

Nach einem Weiteren vorteilhaften Merkmal ist die Abgabeöffnung eines Abzugstrichters durch trichterfeste Leitvorrichtungen unterbrochen, die nach oben verjüngt sind und das Schüttgut in Richtung der benachbarten Einlaß/Auslaßöffnungen lenken.

Ferner ist es vorteilhaft, daß die Abzugstrichter derart nebeneinander angeordnet sind, daß die ihnen zugeordneten Drehschleusen parallele Drehachsen haben und vorzugsweise in einer gemeinsamen Ebene angeordnet sind.

Vorzugsweise ist die Abzugsvorrichtung des Sammeltrichters als Schneckenförderer ausgebildet.

In wesentlicher Weiterbildung der Erfindung wird vorgeschlagen, daß an der schlitzförmigen Abgabeöffnung jedes Abzugstrichters mindestens auf derjenigen Seite, die in Drehrichtung der zugehörigen Drehschleuse vorne liegt, eine teilzylindrische Wand ansetzt, die die Drehschleuse über einem Winkelbereich umgreift, der mindestens dem Winkelbereich der Einlaß/Auslaßöffnung der Drehschleuse entspricht. Dadurch wird verhindert, daß die Drehschleuse, wenn sie ihre Füllposition verläßt, über ihre Einlaß/Auslaßöffnung eine Verbindung zwischen der Abgabeöffnung des zugehörigen Abzugstrichters und dem Sammeltrichter einen Durchlaß öffnet, durch den das Schüttgut hindurchschießen kann, und zwar solange, bis die Umfangswand der Drehschleuse die Abgabeöffnung völlig geschlossen hat.

Dabei hat es sich als besonders vorteilhaft herausgestellt, daß an der schlitzförmigen Abgabeöffnung jedes Abzugstrichters beidseitig teilzylindrische Wände ansetzen, die die zugehörige Drehschleuse soweit umgreifen, daß zwischen ihnen eine Öffnung von der Breite der Einlaß/Auslaßöffnung der Drehschleuse verbleibt.

Im folgenden wird die Erfindung anhand von in der Zeichnung dargestellten Ausführungsbeispielen näher erläutert. In der Zeichnung zeigen:
- Fig. 1: eine perspektivische Schemadarstellung des unteren Abschnitts eines Adsorptionsmittelreaktors mit einer Austragsvorrichtung nach der Erfindung;
- Fig. 2A/B: einen schematischen Radialschnitt durch eine Drehschleuse und eine zugehörige Abgabeöffnung in der Dosierstellung bzw. In der Entleerungsstellung;
- Fig. 3: einen schematischen Axialschnitt durch den unteren Abschnitt eines Abzugstrichters mit zugehöriger Drehschleuse;
- Fig. 4: in einer Darstellung entsprechend Fig. 2B einen Schnitt durch eine abgewandelte Drehschleuse in der Entleerungsstellung.

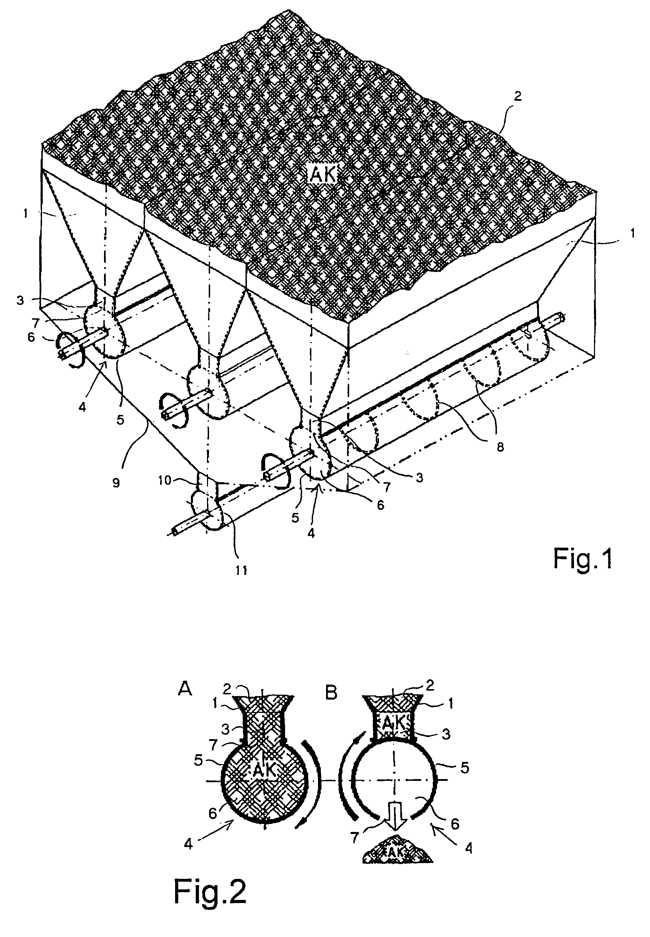

Nach Fig. 1 weist der Adsorptionsmittelreaktor in seinem unteren Abschnitt drei parallel zueinander verlaufende, aneinandergrenzende Abzugstrichter 1 auf, über denen eine Schicht aus Adsorptionsmittel 2 liegt. Die Abzugstrichter haben einen rechteckigen Querschnitt und weisen jeweils an ihrer Unterseite eine sich über ihre gesamte Länge erstreckende schlitzförmige Abgabeöffnung 3 auf. Unter diesen Abgabeöffnungen 3 ist jeweils mittig eine Drehschleuse 4 angeordnet, deren zylindrische Umfangswand 5 eine Schleusenkammer 6 begrenzt. Die zylindrische Umfangswand 5 bildet eine an den Querschnitt der Abgabeöffnung 3 des Abzugstrichters 1 angepaßte Einlaß/Auslaßöffnung 7, die schlitzförmig in Richtung der Drehachse der Drehschleuse verläuft. Innen an der Umfangswand 5 der Schleusenkammer 6 sind in regelmäßigen Abständen Stabilisierungsringe 8 angebracht, die die mechanische Stabilität der Drehschleuse 4 erhöhen. Die Drehschleuse 4 kann mit Hilfe eines Motors um ihre Drehachse gedreht werden. Die drei aneinandergrenzenden Abzugstrichter 1 mit ihren zugehörigen Schleusenkammern 6 sind in einem gemeinsamen Sammeltrichter 9 mit rechteckigem Querschnitt angeordnet, dessen Länge an die Länge der Abzugstrichter und der Schleusenkammern angepaßt ist. Auch an der Unterseite des Sammeltrichters 9 erstreckt sich in Längsrichtung eine schlitzförmige Abgabeöffnung 10. Unter dieser Abgabeöffnung ist ein Sammelzylinder 11 eines Schneckenförderers angebracht.

Zum Austragen von Adsorptionsmittel 2 werden die drei zylindrischen Drehschleusen 4 bis zu der in Fig. 2A gezeigten Stellung gedreht, in der ihre Einlaß/Auslaßöffnungen 7 nach oben gerichtet sind und mit den zugehörigen Abgabeöffnungen 3 der Abzugstrichter 1 kommunizieren. Das Schüttgut fällt unter Einwirkung der Schwerkraft in die Schleusenkammern 6 und füllt diese praktisch instantan, wobei nur kleine Leerräume oberhalb der Böschungswinkel frei bleiben. Nach dem Füllen kann die Schleusenkammer entweder sofort oder nach einer beliebigen Zeitdauer entleert werden, ohne daß in der Zwischenzeit weiteres Adsorptionsmittel aus dem Abzugstrichter austritt.

Zur Entleerung werden die Schleusenkammern 6 um 180° in die in Fig. 2B gezeigte Stellung gedreht, wobei das Adsorptionsmittel 2 unter Einwirkung der Schwerkraft in den Sammeltrichter 9 fällt, während die Abgabeöffnung des zugehörigen Abzugstrichters durch die Umfangswand 5 geschlossen ist. Der Sammeltrichter ist unten geöffnet und gibt das Schüttgut in den Sammelzylinder 11 des Schneckenförderers ab. Dieser transportiert das Schüttgut zu einem beliebigen Ort. Anstelle des Sammelzylinders kann jedoch auch eine Drehschleuse vorgesehen sein. In diesem Fall wird das Adsorptionsmittel durch Drehung der Drehschleuse um 180° nach unten abgegeben.

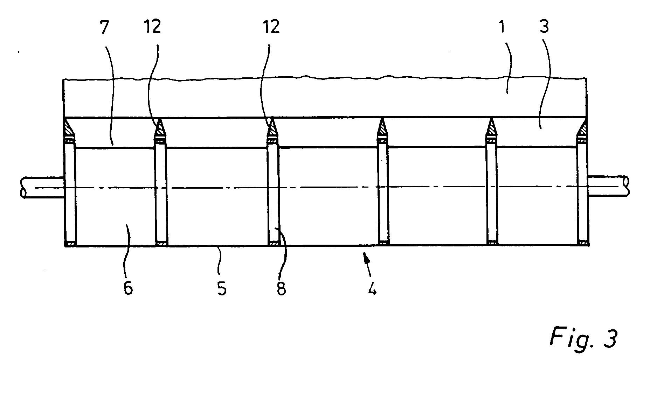

Fig. 3 zeigt einen schematischen Axialschnitt durch den unteren Abschnitt eines der Abzugstrichter 1 mit zugehöriger Drehschleuse 4. Die Umfangswand 5 der Schleusenkammer 6 ist entsprechend Fig. 1 durch mehrere beabstandete Stabilisierungsringe 8 mechanisch verstärkt. Diese Stabilisierungsringe bilden Stege, die eine Reihe von parallel zur Drehachse der Drehschleuse liegende Einlaß/Auslaßöffnungen 7 begrenzen. In der Abgabeöffnung 3 des Abzugstrichters 1 sind oberhalb der Stabilisierungsringe 8 Leitvorrichtungen 12 ausgebildet, die nach oben verjüngt sind und das Schüttgut in Richtung der benachbarten Einlaß/Auslaßöffnungen 7 lenken. Auf diese Weise werden Aufböschungen in der Abgabeöffnung 3 im Bereich der Stabilisierungsringe ausgeschlossen, und es wird ein gleichmäßiges Abtragen des Schüttgutes gewährleistet.

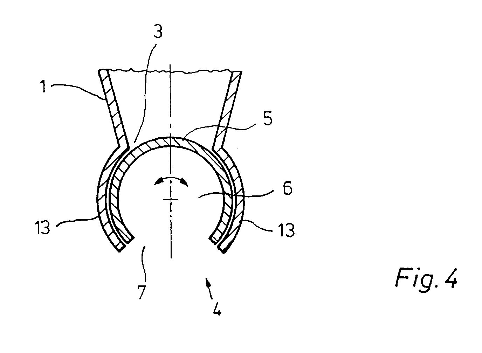

Bei der abgewandelten Ausführungsform der Drehschleuse 4 nach Fig. 4 schließt sich an die schlitzförmige Abgabeöffnung 3 des Abzugstrichters 1 beidseitig je eine teilzylindrische Wand 13 an. Die teilzylindrischen Wände 13 umgreifen die Drehschleuse soweit, daß zwischen ihnen eine Öffnung von der Breite der Einlaß/Auslaßöffnung 7 der Drehschleuse verbleibt. Auf diese Weise wird verhindert, daß die Einlaß/Auslaßöffnung 7 bei Drehung der Drehschleuse 4 an den Kanten der Abgabeöffnung 3 Durchlässe schafft, durch die das Schüttgut aus dem Abzugstrichter 1 direkt in den hier nicht dargestellten Sammeltrichter schießen kann. Diese Gefahr würde sonst insbesondere dann bestehen, wenn die Schleusenkammer 6 aus ihrer Füllposition heraus mit ihrer Drehbewegung beginnt.

Im Rahmen der Erfindung sind zahlreiche Variationsmöglichkeiten denkbar. Je nach der Grundfläche der Schüttgutschicht können beliebig viele Abzugstrichter 1 nebeneinander angeordnet sein. Zum Sammeln des abgegebenen Schüttguts können untereinander mehrere Ebenen von Abzugstrichtern 1 angeordnet sein. In der untersten Ebene kann das Schüttgut entweder über eine beliebige Breite direkt durch eine Auslaßöffnung abgegeben werden, oder es können, wie beschrieben, Schneckenförderer o.dgl. für den gezielten Abtransport eingesetzt werden. Anstelle einer ungeteilten Schleusenkammer kann auch eine durch radial verlaufende Scheiben unterteilte Schleusenkammer verwendet werden, deren einzelne Zellen jeweils mindestens eine zugehörige Einlaß/Auslaßöffnung aufweisen. Durch die Scheiben wird die Stabilität der Schleusenkammer weiter erhöht. Jede Zelle kann außerdem Stabilisierungsringe aufweisen. Als Drehantrieb und zur Steuerung können sowohl gemeinsame als auch getrennte Komponenten für die einzelnen Drehschleusen verwendet werden, wobei diese synchron oder asynchron arbeiten können.

## Patentansprüche

1. Adsorptionsmittelreaktor mit einer Mehrzahl von Abzugstrichtern (1) zum Austragen von schüttfähigem Adsorptionsmittel (Schüttgut) (2) aus dem Reaktor, wobei jeder Abzugstrichter wenigstens eine Abgabeöffnung (3) aufweist und wobei unter den Abgabeöffnungen einer Mehrzahl von Abzugstrichtern ein gemeinsamer Sammeltrichter (9) angeordnet ist, der zu seiner Entleerung eine eigene Abzugsvorrichtung aufweist,
**dadurch gekennzeichnet,**
daß die Abgabeöffnungen (3) der Abzugstrichter (1) schlitzförmig ausgebildet sind und jeweils zwei parallele Begrenzungskanten aufweisen;
unter oder in den Abgabeöffnungen (3) jeweils eine Drehschleuse (4) mit wenigstens einer Schleusenkammer (6) angeordnet ist, die von einer im wesentlichen zylindrischen Umfangswand (5) begrenzt ist;
die zylindrische Umfangswand (5) mehrere dem Querschnitt der Abgabeöffnung (3) angepaßte Einlaß/Auslaßöffnungen (7) hat, die in einer Reihe axial hintereinander parallel zur Drehachse der Drehschleuse ausgebildet sind; und
die Anordnung der Drehschleuse (4) und die Abmessung ihrer zylindrischen Umfangswand (5) so gewählt sind, daß alle in einer Reihe angeordneten Einlaß/Auslaßöffnung (7) in einer Drehstellung mit der zugehörigen Abgabeöffnung (3) kommunizieren und in wenigstens einer anderen Drehstellung eine Entleerung der Schleusenkammer (6) unter Schwerkraft des Schüttguts (2) ermöglichen, wobei in der zuletzt genannten Stellung die Trichter-Abgabeöffnung (3) durch die als Verschlußkörper wirkende Umfangswand (5) der Drehschleuse (4) verschlossen ist.

2. Adsorptionsmittelreaktor nach Anspruch 1, dadurch gekennzeichnet, daß die Schleusenkammer (6) durch wenigstens eine radial verlaufende Scheibe in mehrere axial hintereinander angeordneten Zellen unterteilt ist.

3. Adsorptionsmittelreaktor nach Anspruch 2, dadurch gekennzeichnet, daß jede dar in einer Reihe ausgerichteten Einlaß/Auslaßöffnungen (7) einer Zelle der Schleusenkammer zugeordnet ist.

4. Adsorptionsmittelreaktor nach einem der Ansprüche 1 bis 3, dadurch gekennzeichnet, daß innen auf der zylindrischen Umfangswand (5) der Schleusenkammer (6) in regelmäßigen Abständen umlaufende Stabilisierungsringe (8) angeordnet sind.

5. Adsorptionsmittelreaktor nach einem der Ansprüche 1 bis 4, dadurch gekennzeichnet, daß die Abgabeöffnung (3) eines Abzugstrichters (1) durch trichterfeste Leitvorrichtungen (12) unterbrochen ist, die nach oben verjüngt sind und das Schüttgut in Richtung der benachbarten Einlaß/Auslaßöffnungen (7) lenken.

6. Adsorptionsmittelreaktor nach einem der Ansprüche 1 bis 5, dadurch gekennzeichnet, daß die Abzugstrichter (1) derart nebeneinander angeordnet sind, daß die ihnen zugeordneten Drehschleusen (4) parallele Drehachsen haben und vorzugsweise in einer gemeinsamen Ebene angeordnet sind.

7. Adsorptionsmittelreaktor nach Anspruch 6, dadurch gekennzeichnet, daß die Abzugsvorrichtung des Sammeltrichters (9) als Schneckenförderer ausgebildet ist.

8. Adsorptionsmittelreaktor nach einem der Ansprüche 1 bis 7, dadurch gekennzeichnet, daß an der schlitzförmigen Abgabeöffnung (3) jedes Abzugstrichters (1) mindestens auf derjenigen Seite, die in Drehrichtung der zugehörigen Drehschleuse (4) vorne liegt, eine teilzylindrische Wand (13) ansetzt, die die Drehschleuse (4) über einem Winkelbereich umgreift, der mindestens dem Winkelbereich der Einlaß/Auslaßöffnung (7) der Drehschleuse (4) entspricht.

9. Adsorptionsmittelreaktor nach Anspruch 8, dadurch gekennzeichnet, daß an der schlitzförmigen Abgabeöffnung (3) jedes Abzugstrichters (1) beidseitig teilzylindrische Wände (13) ansetzen, die die zugehörige Drehschleuse (4) so weit umgreifen, daß zwischen ihnen eine Öffnung von der Breite der Einlaß/Auslaßöffnung (7) der Drehschleuse (4) verbleibt.

## Claims

1. Adsorption means reactor with a plurality of discharge funnels (1) for the discharge of pourable adsorption means (bulk material) (2) from the reactor, wherein each discharge funnel has at least one delivery opening (3) and wherein a common collecting funnel (9), which has an own discharge device for emptying thereof, is arranged under the delivery openings of a plurality of discharge funnels, characterised thereby that the delivery openings (3) of the discharge funnels (1) are constructed to be slot-shaped and each have two parallel boundary edges; a respective rotary lock (4) with at least one lock chamber (6), which is bounded by a substantially cylindrical circumferential wall (5), is arranged under or in each of the delivery openings (3); the cylindrical circumferential wall (5) has several inlet/outlet openings (7) which are matched to the cross-section of the opening (3) and which are formed in a row axially one behind the other and parallel to the rotational axis of the rotary lock; and the arrangement of the rotary lock (4) and the size of its cylindrical circumferential wall (5) are so selected that all inlet/outlet openings (7) arranged in a row communicate with the associated delivery opening (3) in one rotational setting and enable the emptying of the lock chamber (6) under gravitational force of the bulk material (2) in at least one other rotational setting, wherein in the last-mentioned setting the funnel delivery opening (3) is closed by the circumferential wall (5), which acts as a closure body, of the rotary lock (4).

2. Adsorption means reactor according to claim 1, characterised thereby that the lock chamber (6) is subdivided by at least one radially extending disc into several cells arranged exactly one behind the other.

3. Adsorption means reactor according to claim 2, characterised thereby that each of the inlet/outlet openings (7) aligned in a row is associated with a cell of the lock chamber.

4. Adsorption means reactor according to one of claims 1 to 3, characterised thereby that reinforcing rings (8) extending around at uniform spacings are arranged at the inside on the cylindrical circumferential wall (5) of the lock chamber (6).

5. Adsorption means reactor according to one of claims 1 to 4, characterised thereby that the delivery opening (3) of a discharge funnel (1) is interrupted by guide devices (12), which are fixed relative to the funnel and narrow upwardly and direct the bulk material in the direction of the adjacent inlet/outlet openings (7).

6. Adsorption means reactor according to one of claims 1 to 5, characterised thereby that the discharge funnels (1) are arranged adjacent to one another in such a manner that the associated rotary locks (4) at the inside have parallel rotational axes and are preferably arranged in a common plane.

7. Adsorption means reactor according to claim 6, characterised thereby that the discharge device of the collecting funnel (9) is constructed as a worm conveyor.

8. Adsorption means reactor according to one of claims 1 to 7, characterised thereby that a part-cylindrical wall (13) is placed at the slot-shaped delivery opening (3) of each discharge funnel (1) at least at that side, which lies in front in the rotational direction of the associated rotary lock (4), and engages around the rotary lock (4) over an angular range which corresponds at least to the angular range of the inlet/outlet opening (7) of the rotary lock (4).

9. Adsorption means reactor according to claim 8, characterised thereby that part-cylindrical walls (13) are placed at the slot-shaped delivery opening (3) of each discharge funnel (1) at both sides and engage around the associated rotary lock (4) to such an extent that an opening of the width of the inlet/outlet opening (7) of the rotary lock (4) remains between them.

## Revendications

1. Réacteur de produit adsorbant avec une pluralité de trémis d'évacuation (1) pour évacuer des produits d'adsorption aptes à être déversés (produits en vrac) (2) du réacteur, chaque trémie d'évacuation présentant au moins une ouverture d'émission (3), et sous les ouvertures d'émission d'une pluralité de trémies d'évacuation étant disposée une trémie de collecte commune (9) qui, pour son vidange, présente un dispositif d'évacuation propre,
caractérisé en ce que,
les ouvertures d'émission (3) des trémies d'évacuation (1) sont réalisées en forme de fente et présentent respectivement deux arêtes de délimitation parallèles;
en ce qu'il est disposé sous ou dans les ouvertures d'émission (3) respectivement une écluse tournante (4) avec au moins une chambre d'écluse (6) qui est délimitée par une paroi de pourtour (5) sensiblement cylindrique;
en ce que la paroi de pourtour cylindrique (5) présente plusieurs ouvertures d'entrée/de sortie (7) adaptées à la section transversale de l'ouverture d'émission (3) qui sont réalisées suivant une rangée axialement les unes derrière les autres parallèlement à l'axe de rotation de l'écluse tournante; et
en ce que la disposition de l'écluse tournante (4) et la dimension de sa paroi périphérique cylindrique (5) sont choisies de façon que toutes les ouvertures d'entrée/de sortie (7) disposées en rangée communiquent dans une position de rotation avec l'ouverture d'émission associée (3) et permettent au moins dans une autre position de rotation un vidange de la chambre d'écluse (6) sous la force de gravité du produit en vrac (2), dans la position indiquée en dernier, l'ouverture d'émission (3) de la trémie étant fermée par la paroi périphérique (5) agissant comme corps de fermeture de l'écluse tournante (4).

2. Réacteur de moyen d'adsorption selon la revendication 1, caractérisé en ce que la chambre d'écluse (6) est divisée par au moins un disque s'étendant radialement en plusieurs cellules disposées axialement les unes derrière les autres.

3. Réacteur de moyen d'adsorption selon la revendication 2, caractérisé en ce que chacune des ouvertures d'entrée/de sortie (7) orientées dans une rangée est associée à une cellule de la chambre d'écluse.

4. Réacteur de moyen d'adsorption selon l'une des revendications 1 à 3, caractérisé en ce que, à l'intérieur sur la paroi périphérique cylindrique (5) de la chambre d'écluse (6) sont disposés des anneaux de stabilisation (8) s'étendant tout autour à des écarts réguliers.

5. Réacteur de moyen d'adsorption selon l'une des revendications 1 à 4, caractérisé en ce que l'ouverture d'émission (3) d'une trémie d'évacuation (1) est interrompue par des dispositifs de guidage (12) solidaires de la trémie qui retrécissent vers le haut et qui guident le produit en vrac dans la direction de l'ouverture d'entrée/de sortie avoisinante.

6. Réacteur de moyen d'adsorption selon l'une des revendications 1 à 5, caractérisé en ce que les trémis d'évacuation (1) sont disposées de telle sorte les unes à côté des autres que les écluses tournantes (4) associées à celles-ci ont des axes de rotation parallèles et sont disposées de préférence dans un plan commun.

7. Réacteur de moyen d'adsorption selon la revendication 6, caractérisé en ce que le dispositif d'évacuation de la trémie collectrice (9) est réalisé sous forme de convoyeur à vis.

8. Réacteur de moyen d'adsorption selon l'une des revendications 1 à 7, caractérisé en ce que s'applique à l'ouverture d'émission en forme de fente (3) de chaque trémie d'évacuation (1) au moins sur le côté qui se situe à l'avant dans la direction de rotation de l'écluse tournante associée (4), une paroi (13) partiellement cylindrique qui entoure l'écluse tournante (4) sur une zone angulaire qui correspond au moins à la zone angulaire de l'ouverture d'entrée/de sortie (7) de l'écluse tournante (4).

9. Réacteur de moyen d'adsorption selon la revendication 8, caractérisé en ce que s'appliquent à l'ouverture d'émission en forme de fente (3) de chaque trémie d'évacuation (1) des deux côtés, des parois partiellement cylindriques (13) qui entourent l'écluse tournante associée (4) suffisamment pour qu'il subsiste entre celles-ci une ouverture de la largeur de l'ouverture d'entrée/de sortie (7) de l'écluse tournante (4).
